# EUROPÄISCHE PATENTSCHRIFT

(11) **EP 4 289 259 B1**
(45) Veröffentlichungstag und Bekanntmachung des Hinweises auf die Patenterteilung: **02.04.2025**
(21) Anmeldenummer: 23172524.3
(22) Anmeldetag: 10.05.2023
(51) Int. Cl.: A01F 25/16, A01F 25/18

(54) **VERFAHREN ZUR ERMITTLUNG DES VERDICHTUNGSZUSTANDS VON IN EINEM FLACHSILO GELAGERTER SILAGE**
METHOD FOR DETERMINING THE COMPACTION STATE OF SILAGE STORED IN A FLAT SILO
PROCÉDÉ DE DÉTERMINATION DE L'ÉTAT DE COMPACTAGE D'UN ENSILAGE STOCKÉ DANS UN SILO PLAT

(30) Priorität: 07.06.2022 DE 102022011428
(43) Veröffentlichungstag der Anmeldung: 13.12.2023
(73) Patentinhaber: Deere & Company, Moline, IL 61265 (US)
(72) Erfinder: Brocke, Stefan, Mannheim (DE); Norbert, Fritz, Mannheim (DE); Schott, Florian, Mannheim (DE)
(74) Vertreter: Dehnhardt, Florian Christopher

(56) Entgegenhaltungen:
- EP-A1- 3 895 520
- EP-A1- 4 144 206
- EP-B1- 3 895 521
- DE-A1- 102019 201 743

## Beschreibung

Die Erfindung betrifft ein Verfahren zur Ermittlung des Verdichtungszustands von in einem Flachsilo gelagerter Silage.

Zur Tierfütterung dient häufig Silage, die aus Grüngut, wie Gras, Mais, Klee, Luzerne, Ackerbohnen oder Getreide, durch Fermentation (Milchsäuregärung) hergestellt wird. Hierzu wird das zuvor gehäckselte Grüngut schichtweise in Flachsilos eingebracht und verdichtet. Dies erfolgt üblicherweise mittels eines landwirtschaftlichen Traktors, der zum Verteilen des Grünguts mit einem Frontlader oder einem Schiebeschild ausgestattet ist. Der Verdichtungszustand des Grünguts im Flachsilo ist dabei wesentlich für die Qualität der Silage, denn diese beeinflusst maßgeblich den Ablauf des Fermentationsprozesses.

Es ist daher Aufgabe, ein Verfahren der eingangs genannten Art anzugeben, das eine verlässliche Beurteilung des Verdichtungszustands des zu silierenden Grünguts in einem Flachsilo erlaubt.

Diese Aufgabe wird durch ein Verfahren mit den Merkmalen des Patentanspruchs 1 gelöst.

Bei dem erfindungsgemäßen Verfahren zur Ermittlung des Verdichtungszustands von in einem Flachsilo gelagerter Silage ist vorgesehen, dass ein zur Verdichtung der Silage verwendetes Arbeitsfahrzeug an zumindest einer Fahrzeugachse luftgefüllte Reifen aufweist, wobei
- in einem ersten Schritt mittels eines Beschleunigungssensors eine in einem Reifenwulst auftretende Normal- und/oder Tangentialbeschleunigung erfasst sowie in Form damit korrespondierender Sensordaten drahtlos an eine Prozessoreinheit übertragen wird,
- in einem zweiten Schritt ausgehend von den übertragenen Sensordaten von der Prozessoreinheit die beim Abrollen des Reifens in einem Eintritts- und einem Austrittspunkt jeweils auftretenden Deformationen des Reifenmantels ermittelt und miteinander verglichen werden, und
- in einem dritten Schritt aufgrund des Vergleichs von der Prozessoreinheit auf das Kompressionsverhalten und daraus wiederum auf den Verdichtungszustand der Silage geschlossen wird.

Das Verfahren macht sich die Erkenntnis zunutze, dass das unter der Last des Arbeitsfahrzeugs beobachtete Kompressionsverhalten der Silage signifikanten Einfluss auf die im Ein- und Austrittsbereich entlang des Latschs beim Abrollen des Reifens auftretende Verformung des Reifenwulsts hat, sodass deren Auswertung einen verlässlichen Rückschluss auf den Umfang der Verdichtbarkeit und damit umgekehrt auf den aktuellen Verdichtungszustand der Silage zulässt. Je größer die Abweichung zwischen den ein- und austrittsseitig beobachteten Deformationen ist, umso stärker lässt sich im Allgemeinen die Silage komprimieren und damit verdichten.

Zum Verdichten der Silage im Flachsilo dient entweder das Arbeitsfahrzeug selbst (meist handelt es sich um einen landwirtschaftlichen Traktor) oder aber ein daran angebrachtes Arbeitswerkzeug in Gestalt einer Silowalze. Die in Bezug auf den Verdichtungszustand gewonnenen Informationen können unter anderem zur aktiven Unterstützung des Verdichtungsprozesses herangezogen werden, beispielsweise durch Ausgabe entsprechender audio-visueller Fahranweisungen an einen Fahrer des Arbeitsfahrzeugs über eine in dem Arbeitsfahrzeug befindliche Nutzerschnittstelle.

Vorteilhafte Weiterbildungen des erfindungsgemäßen Verfahrens gehen aus den Unteransprüchen hervor.

Vorzugsweise wird der Verdichtungszustand aus einem in der Prozessoreinheit hinterlegten Vorhersagemodell ermittelt, wobei dieses in Abhängigkeit einer oder mehrerer Hilfsgrößen parametrisiert wird. Bei den Hilfsgrößen handelt es sich zum Beispiel um Informationen hinsichtlich eines Restfeuchtegehalts, einer Schnittlänge und/oder einer Zusammensetzung der Silage bzw. des zu silierenden Grünguts. Da die vorgenannten Faktoren maßgeblichen Einfluss auf die Verdichtbarkeit bzw. Kompressibilität des Grünguts haben, führt deren Einbeziehung in das Vorhersagemodell zu besonders genauen Ergebnissen hinsichtlich der Beurteilung des jeweiligen Verdichtungszustands.

Der Restfeuchtegehalt kann im Rahmen eines vorhergehenden Arbeitsschritts, insbesondere beim Ernten des Grünguts mittels eines Feldhäckslers, ermittelt werden. Hierzu ist der Feldhäcksler mit einer entsprechenden Messeinrichtung zur Analyse eines beim Entladen durch ein Auswurfrohr hindurchtretenden Erntegutstroms ausgestattet. Eine solche Messeinrichtung wird von John Deere unter der Bezeichnung "HarvestLab 3000" angeboten.

Die Schnittlänge ergibt sich dabei aus den Betriebseinstellungen des Feldhäckslers, die Zusammensetzung des Grünguts hingegen kann der Prozessoreinheit seitens eines Anwenders über die in dem Arbeitsfahrzeug befindliche Nutzerschnittstelle mitgeteilt werden. Hinsichtlich der Frage der Zusammensetzung des Grünguts ist vorrangig die Pflanzenart (beispielsweise Gras, Mais, Klee, Luzerne, Ackerbohnen oder Getreide) von Bedeutung.

Das Vorhersagemodell wird vorab aufgrund empirisch durchgeführter Test- und Messreihen eingelernt und stellt nach Maßgabe der vorstehenden Hilfsgrößen eine eindeutige Korrelation zwischen der durch die Sensordaten des Beschleunigungssensors repräsentierten Messgröße einerseits sowie dem jeweiligen Verdichtungszustand der Silage andererseits her. Zur Verbesserung des Vorhersagehorizonts bietet sich zudem der Einsatz entsprechender KI-Verfahren (KI - Künstliche Intelligenz) an.

Bevorzugt wird das Vorhersagemodell in Abhängigkeit eines Reifentyps bzw. -modells, eines Reifenfülldrucks und/oder einer Umgebungstemperatur parametrisiert.

Die betreffenden Parameter können im Hinblick auf die Angabe von Reifentyp bzw. -modell manuell über die Nutzerschnittstelle oder aber im Falle des Reifenfülldrucks und/oder der Umgebungstemperatur sensorisch erfasst werden. Der hierzu erforderliche Druck- und/oder Temperatursensor kann gemeinsam mit dem Beschleunigungssensor in ein Messmodul integriert sein, das in den Reifenmantel eingebettet ist und mittels eines bewegungsinduzierten Generators oder dergleichen mit elektrischer Energie versorgt wird. Sämtliche Sensordaten werden drahtlos und synchron an die Prozessoreinheit übertragen, sodass deren zeitliche Koinzidenz sichergestellt ist.

Des Weiteren besteht die Möglichkeit, dass der ermittelte Verdichtungszustand der Silage von der Prozessoreinheit durch Verknüpfung mit GPS-basiert ermittelten Positionsinformationen kartografisch verortet sowie als kombinierter Datensatz hinterlegt wird. Die GPS-basierte Ermittlung der Positionsinformationen erfolgt beispielsweise mittels eines herkömmlichen Navigationssystems. Dieses kann Bestandteil des Arbeitsfahrzeugs oder aber eines mobilen Endgeräts (z.B. Mobiltelefon) sein, das über eine Wifi-Verbindung mit der Prozessoreinheit drahtlos kommuniziert.

Hinsichtlich der Verwertung der für den Verdichtungszustand der Silage gewonnenen Informationen gibt es nun verschiedene Möglichkeiten. So können diese einerseits in Echtzeit über die Nutzerschnittstelle audio-visuell ausgegeben, andererseits aber auch zum Zwecke der Dokumentation drahtlos an einen zentralen Datenserver übertragen werden. In letzterem Fall werden diese von der Prozessoreinheit zugleich mit einem Zeitstempel zur nachvollziehbaren Beurteilung des Verlaufs des Fermentationsprozesses versehen.

Das erfindungsgemäße Verfahren zur Ermittlung des Verdichtungszustands von in einem Flachsilo gelagerter Silage wird im Folgenden anhand der beigefügten Zeichnungen näher beschrieben. Dabei beziehen sich identische Bezugszeichen auf übereinstimmende oder bezüglich ihrer Funktion vergleichbare Komponenten. Es zeigen:
- Fig. 1: eine in einem landwirtschaftlichen Traktor befindliche Anordnung zur Ausführung des erfindungsgemäßen Verfahrens zur Ermittlung des Verdichtungszustands von in einem Flachsilo gelagerter Silage, und
- Fig. 2: ein als Blockdiagramm veranschaulichtes Ausführungsbeispiel des erfindungsgemäßen Verfahrens.

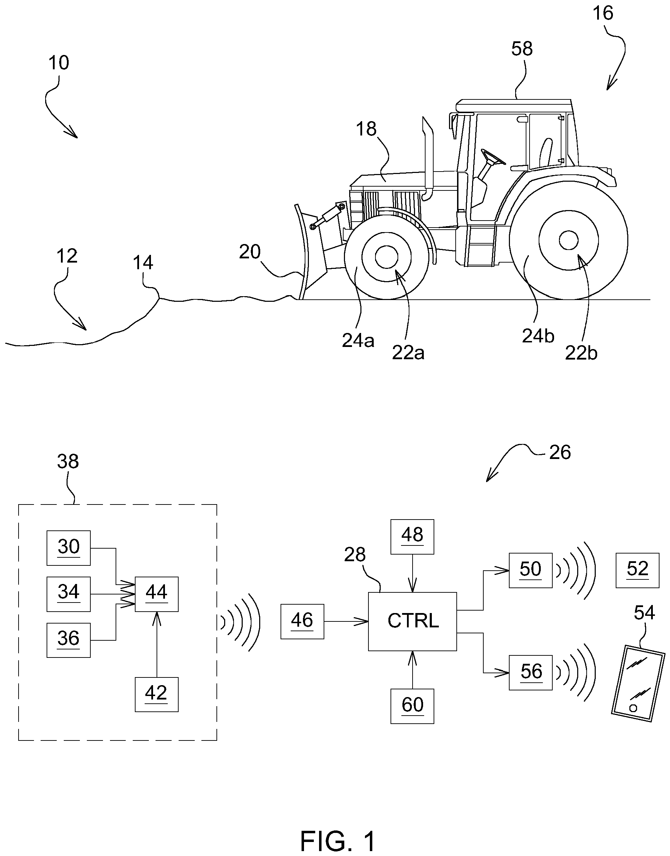

Fig. 1 zeigt eine Anordnung zur Ausführung des erfindungsgemäßen Verfahrens zur Ermittlung des Verdichtungszustands von in einem Flachsilo gelagerter Silage.

Die in dem Flachsilo 10 befindliche Silage 12 wird hierbei aus Grüngut 14, wie Gras, Mais, Klee, Luzerne, Ackerbohnen oder Getreide, durch Fermentation (Milchsäuregärung) hergestellt. Hierzu wird das zuvor gehäckselte Grüngut 14 mittels eines Arbeitsfahrzeugs 16 schichtweise in das Flachsilo 10 eingebracht und verdichtet. Dieser Vorgang wird vorliegend mittels eines landwirtschaftlichen Traktors 18 durchgeführt, an dem zum Verteilen des Grünguts 14 ein Schiebeschild 20 angebracht ist.

Der landwirtschaftliche Traktor 18 weist sowohl an einer Vorderachse 22a wie auch an einer Hinterachse 22b luftgefüllte Reifen 24a, 24b auf, die das zu silierende Grüngut 14 beim Überfahren unter dem Gewicht des landwirtschaftlichen Traktors 18 zusammenpressen und dabei entsprechend verdichten. Zusätzlich kann zu diesem Zweck an dem landwirtschaftlichen Traktor 18 auch ein als Silowalze ausgebildetes Arbeitswerkzeug angebracht sein (nicht dargestellt).

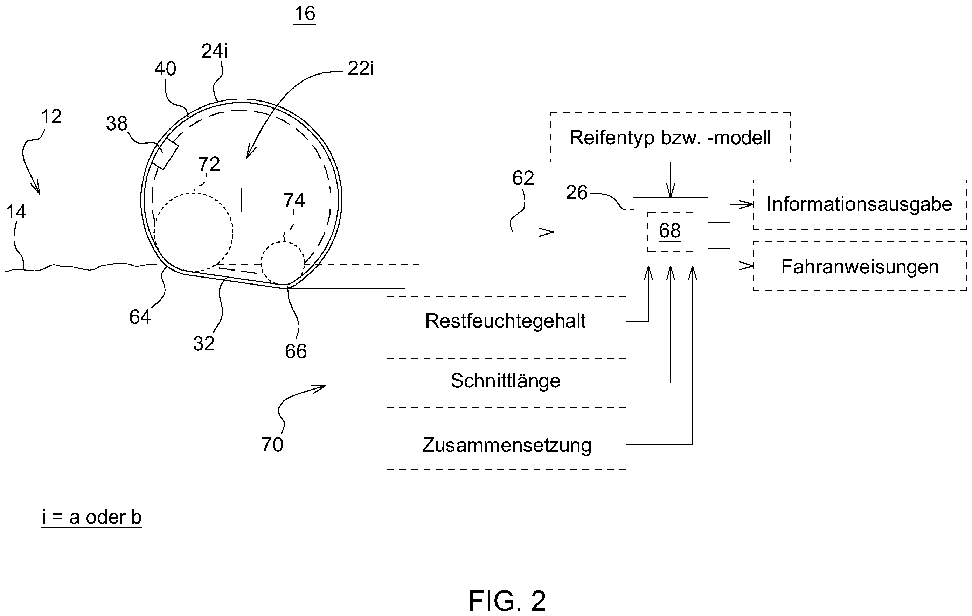

Gemäß Fig. 1 umfasst die in dem landwirtschaftlichen Traktor 18 untergebrachte Anordnung 26 eine Prozessoreinheit 28 sowie einen wenigstens einem der Reifen 24i (i = a oder b) zugeordneten Beschleunigungssensor 30, der eine in einem Reifenwulst 32 auftretende Normal- und/oder Tangentialbeschleunigung erfasst (siehe hierzu Fig. 2).

Der Beschleunigungssensor 30 ist gemeinsam mit einem Druck- und/oder Temperatursensor 34, 36 zur sensorischen Erfassung eines Reifenfülldrucks und/oder einer Umgebungstemperatur in ein Messmodul 38 integriert, das in den Reifenmantel 40 eingebettet ist und mittels eines bewegungsinduzierten Generators 42 mit elektrischer Energie versorgt wird. Sämtliche Sensordaten werden drahtlos und synchron mittels eines Transceivers 44 an die Prozessoreinheit 28 bzw. eine damit verbundene Funkschnittstelle 46 übertragen. Zur Erhöhung der Datenqualität können sowohl die Reifen 24a der Vorderachse 22a wie auch die Reifen 24b der Hinterachse 22b jeweils mit einem eigenen Messmodul 38 ausgestattet sein, wobei die Prozessoreinheit 28 im Falle einer Vorwärtsfahrt die Sensordaten der Reifen 24a der Vorderachse 22a bzw. im Falle einer Rückwärtsfahrt die Reifen 24b der Hinterachse 22b zum Zwecke der Ermittlung des Verdichtungszustands der Silage 12 auswertet.

Die Prozessoreinheit 28 steht ebenfalls mit einem Navigationssystem 48 sowie über eine Datenschnittstelle 50 drahtlos mit einem zentralen Datenserver 52 in Verbindung. Das Navigationssystem 48 ist Bestandteil des landwirtschaftlichen Traktors 18 oder aber eines mobilen Endgeräts 54 (z.B. Mobiltelefon), das über eine mit einer weiteren Datenschnittstelle 56 hergestellte Wifi-Verbindung mit der Prozessoreinheit 28 drahtlos kommuniziert.

Ausgabeseitig lässt sich eine in einer Fahrerkabine 58 des landwirtschaftlichen Traktors 18 befindliche Nutzerschnittstelle 60 seitens der Prozessoreinheit 28 ansteuern.

Fig. 2 zeigt ein als Blockdiagramm veranschaulichtes Ausführungsbeispiel des erfindungsgemäßen Verfahrens.

Hierbei wird zunächst in einem ersten Schritt mittels des Messmoduls 38 die im Reifenwulst 32 auftretende Normal- und/oder Tangentialbeschleunigung einschließlich des Reifenfülldrucks und/oder der zugehörigen Umgebungstemperatur erfasst sowie in Form der damit korrespondierenden Sensordaten 62 drahtlos über den Transceiver 44 sowie die Funkschnittstelle 46 an die Prozessoreinheit 28 übertragen.

Ausgehend von den übertragenen Sensordaten 62 werden von der Prozessoreinheit 28 in einem zweiten Schritt die beim Abrollen des Reifens 24i in einem Eintritts- und einem Austrittspunkt 64, 66 jeweils auftretenden Deformationen des Reifenmantels 40 ermittelt und miteinander verglichen, wobei aufgrund des Vergleichs von der Prozessoreinheit 28 in einem dritten Schritt auf das Kompressionsverhalten und daraus wiederum auf den Verdichtungszustand der Silage 12 geschlossen wird.

Der Verdichtungszustand wird aus einem in der Prozessoreinheit 28 hinterlegten Vorhersagemodell 68 ermittelt, wobei dieses in Abhängigkeit einer oder mehrerer Hilfsgrößen 70 parametrisiert wird. Bei den Hilfsgrößen 70 handelt es sich um Informationen hinsichtlich eines Restfeuchtegehalts, einer Schnittlänge und/oder einer Zusammensetzung der Silage 12 bzw. des zu silierenden Grünguts 14.

Der Restfeuchtegehalt wird im Rahmen eines vorhergehenden Arbeitsschritts, insbesondere beim Ernten des Grünguts 14 mittels eines Feldhäckslers, ermittelt. Hierzu ist der Feldhäcksler mit einer entsprechenden Messeinrichtung zur Analyse eines beim Entladen durch ein Auswurfrohr hindurchtretenden Erntegutstroms ausgestattet. Eine solche Messeinrichtung wird von John Deere unter der Bezeichnung "HarvestLab 3000" angeboten.

Die Schnittlänge ergibt sich dabei aus den Betriebseinstellungen des Feldhäckslers, die Zusammensetzung des Grünguts 14 hingegen wird der Prozessoreinheit 28 seitens eines Anwenders über die in dem landwirtschaftlichen Traktor 18 befindliche Nutzerschnittstelle 60 mitgeteilt. Hinsichtlich der Frage der Zusammensetzung des Grünguts 14 ist vorrangig die Pflanzenart (beispielsweise Gras, Mais, Klee, Luzerne, Ackerbohnen oder Getreide) von Bedeutung.

Ergänzend wird das Vorhersagemodell 68 in Abhängigkeit eines Reifentyps bzw. -modells sowie des Reifenfülldrucks und/oder der Umgebungstemperatur parametrisiert, wobei sich die letzten beiden Parameter aus den vom Messmodul 38 übertragenen Sensordaten 62 ergeben. Die Auswahl des verwendeten Reifentyps bzw. -modells erfolgt manuell über die Nutzerschnittstelle 60.

Das Vorhersagemodell 68 wird vorab aufgrund empirisch durchgeführter Test- und Messreihen eingelernt und stellt nach Maßgabe der Hilfsgrößen 70 eine eindeutige Korrelation zwischen der durch die Sensordaten 62 des Beschleunigungssensors 30 repräsentierten Messgröße einerseits sowie dem jeweiligen Verdichtungszustand der Silage 12 andererseits her.

Das Verfahren macht sich die Erkenntnis zunutze, dass das unter der Last des landwirtschaftlichen Traktors 18 beobachtete Kompressionsverhalten der Silage 12 signifikanten Einfluss auf die im Ein- und Austrittsbereich 64, 66 entlang des Latschs beim Abrollen des Reifens 24i auftretende Verformung des Reifenwulsts 32 hat, sodass deren Auswertung einen verlässlichen Rückschluss auf den Umfang der Verdichtbarkeit und damit umgekehrt auf den aktuellen Verdichtungszustand der Silage 12 zulässt. Je größer die Abweichung zwischen den ein- und austrittsseitig beobachteten Deformationen ist, umso stärker lässt sich im Allgemeinen die Silage 12 komprimieren und damit verdichten. Die beim Überfahren des Grünguts 14 auftretende Verformung, die den Verlauf einer ein- bzw. austrittseitigen Verrundung des Reifenwulsts 32 aufweist, ist in Fig. 2 durch jeweilige Kreise 72, 74 entsprechenden Durchmessers angedeutet.

Zusätzlich wird der ermittelte Verdichtungszustand der Silage 12 von der Prozessoreinheit 28 durch Verknüpfung mit GPS-basiert ermittelten Positionsinformationen kartografisch verortet sowie als kombinierter Datensatz in einem Arbeitsspeicher der Prozessoreinheit 28 hinterlegt. Die GPS-basierte Ermittlung der Positionsinformationen erfolgt mittels des Navigationssystems 48.

Hinsichtlich der Verwertung der für den Verdichtungszustand der Silage 12 gewonnenen Informationen gibt es nun verschiedene Möglichkeiten. So können diese einerseits in Echtzeit über die Nutzerschnittstelle 60 audio-visuell ausgegeben, andererseits aber auch zum Zwecke der Dokumentation drahtlos an den zentralen Datenserver 52 übertragen werden. In letzterem Fall werden diese von der Prozessoreinheit 28 zugleich mit einem Zeitstempel zur nachvollziehbaren Beurteilung des Verlaufs des Fermentationsprozesses versehen.

Weiterhin werden die in Bezug auf den Verdichtungszustand gewonnenen Informationen zur aktiven Unterstützung des Verdichtungsprozesses herangezogen. Dies erfolgt durch Ausgabe entsprechender audio-visueller Fahranweisungen an einen Fahrer des landwirtschaftlichen Traktors 18 über die Nutzerschnittstelle 60.

## Patentansprüche

1. Verfahren zur Ermittlung des Verdichtungszustands von in einem Flachsilo gelagerter Silage, bei dem ein zur Verdichtung der Silage (12) verwendetes Arbeitsfahrzeug (16) an zumindest einer Fahrzeugachse (22a, 22b) luftgefüllte Reifen (24a, 24b) aufweist, wobei
in einem ersten Schritt mittels eines Beschleunigungssensors (30) eine in einem Reifenwulst (32) auftretende Normal- und/oder Tangentialbeschleunigung erfasst sowie in Form damit korrespondierender Sensordaten (62) drahtlos an eine Prozessoreinheit (28) übertragen wird,
in einem zweiten Schritt ausgehend von den übertragenen Sensordaten (62) von der Prozessoreinheit (28) die beim Abrollen des Reifens (24a, 24b) in einem Eintritts- und einem Austrittspunkt (64, 66) jeweils auftretenden Deformationen des Reifenmantels (40) ermittelt und miteinander verglichen werden, und
in einem dritten Schritt aufgrund des Vergleichs von der Prozessoreinheit (28) auf das Kompressionsverhalten und daraus wiederum auf den Verdichtungszustand der Silage (12) geschlossen wird.

2. Verfahren nach Anspruch 1, **dadurch gekennzeichnet, dass** der Verdichtungszustand aus einem in der Prozessoreinheit (28) hinterlegten Vorhersagemodell (68) ermittelt wird, wobei dieses in Abhängigkeit einer oder mehrerer Hilfsgrößen (70) parametrisiert wird.

3. Verfahren nach Anspruch 2, **dadurch gekennzeichnet, dass** das Vorhersagemodell (68) in Abhängigkeit eines Reifentyps bzw. -modells, eines Reifenfülldrucks und/oder einer Umgebungstemperatur parametrisiert wird.

4. Verfahren nach wenigstens einem der vorhergehenden Ansprüche, **dadurch gekennzeichnet, dass** der ermittelte Verdichtungszustand der Silage (12) von der Prozessoreinheit (28) durch Verknüpfung mit GPS-basiert ermittelten Positionsinformationen kartografisch verortet sowie als kombinierter Datensatz hinterlegt wird.

5. Verfahren nach wenigstens einem der vorhergehenden Ansprüche, **dadurch gekennzeichnet, dass** die für den Verdichtungszustand der Silage (12) gewonnenen Informationen über eine Nutzerschnittstelle (60) audio-visuell ausgegeben und/oder drahtlos an einen zentralen Datenserver (52) übertragen werden.

## Claims

1. Method for ascertaining the compaction state of silage stored in a flat silo, in which a work vehicle (16) used for compacting the silage (12) has inflated tyres (24a, 24b) on at least one vehicle axle (22a, 22b), wherein
in a first step, by means of an acceleration sensor (30), a normal and/or tangential acceleration occurring in a tyre bead (32) is detected and wirelessly transmitted in the form of sensor data (62) corresponding thereto to a processor unit (28),
in a second step, starting from the transferred sensor data (62) from the processor unit (28), the deformations of the tyre casing (40) occurring in each case during the rolling of the tyre (24a, 24b) in an entry point and an exit point (64, 66) are ascertained and compared to one another, and
in a third step, on the basis of the comparison, the compression behaviour and in turn therefrom the compaction state of the silage (12) is concluded by the processor unit (28).

2. Method according to Claim 1, **characterized in that** the compaction state is ascertained from a prediction model (68) stored in the processor unit (28), wherein this prediction model is parameterized as a function of one or more auxiliary variables (70).

3. Method according to Claim 2, **characterized in that** the prediction model (68) is parameterized as a function of a tyre type or model, a tyre filling pressure and/or an ambient temperature.

4. Method according to at least one of the preceding claims, **characterized in that** the ascertained compaction state of the silage (12) is cartographically located by the processor unit (28) by linking to GPS-based ascertained items of position information and stored as a combined data set.

5. Method according to at least one of the preceding claims, **characterized in that** the items of information obtained for the compaction state of the silage (12) are output audio-visually via a user interface (60) and/or transferred wirelessly to a central data server (52).

## Revendications

1. Procédé pour déterminer l'état de compactage d'ensilage stocké dans un silo plat, selon lequel un véhicule de travail (16) utilisé pour compacter l'ensilage (12) présente des pneus (24a, 24b) remplis d'air sur au moins un essieu de véhicule (22a, 22b), dans lequel
dans une première étape, une accélération normale et/ou tangentielle se produisant dans un talon de pneu (32) est détectée au moyen d'un capteur d'accélération (30) et transmise sans fil à une unité de traitement (28) sous la forme de données de capteur (62) correspondantes,
dans une deuxième étape, à partir des données de capteur (62) transmises, l'unité de traitement (28) détermine les déformations de l'enveloppe de pneu (40) se produisant respectivement à un point d'entrée et à un point de sortie (64, 66) lors du roulement du pneu (24a, 24b) et les compare entre elles, et
dans une troisième étape, sur la base de la comparaison, l'unité de traitement (28) conclut au comportement de compression et, à partir de là, à l'état de compactage de l'ensilage (12).

2. Procédé selon la revendication 1, **caractérisé en ce que** l'état de compactage est déterminé à partir d'un modèle de prédiction (68) enregistré dans l'unité de traitement (28), celui-ci étant paramétré en fonction d'une ou plusieurs grandeurs auxiliaires (70).

3. Procédé selon la revendication 2, **caractérisé en ce que** le modèle de prédiction (68) est paramétré en fonction d'un type ou d'un modèle de pneu, d'une pression de gonflage du pneu et/ou d'une température ambiante.

4. Procédé selon au moins l'une quelconque des revendications précédentes, **caractérisé en ce que** l'état de compactage déterminé de l'ensilage (12) est localisé de manière cartographique par l'unité de traitement (28) en le combinant avec des informations de position déterminées sur la base du GPS et est enregistré sous la forme d'un jeu de données combiné.

5. Procédé selon au moins l'une quelconque des revendications précédentes, **caractérisé en ce que** les informations obtenues pour l'état de compactage de l'ensilage (12) sont émises de manière audio-visuelle via une interface utilisateur (60) et/ou transmises sans fil à un serveur de données central (52).
